# EUROPÄISCHE PATENTSCHRIFT

(11) **EP 1 565 357 B1**
(45) Veröffentlichungstag und Bekanntmachung des Hinweises auf die Patenterteilung: **31.05.2006**
(21) Anmeldenummer: 03767630.1
(22) Anmeldetag: 24.11.2003
(51) Int. Cl.: B60R 22/34

(54) **BEFESTIGUNGSANORDNUNG FÜR EINEN GURTAUFROLLER**
FIXING DEVICE FOR A SEAT BELT WINDER
DISPOSITIF DE FIXATION POUR UN ENROULEUR DE CEINTURE

(30) Priorität: 26.11.2002 DE 10254968
(43) Veröffentlichungstag der Anmeldung: 24.08.2005
(73) Patentinhaber: AUTOLIV DEVELOPMENT AB, 447 83 Vargarda (SE)
(72) Erfinder: EHLERS, Jens, 25358 Horst (DE); HEINE, Volkmar, 22763 Hamburg (DE); JABUSCH, Ronald, 25336 Elmshorn (DE); KRÖGER, Doris, 25436 Tornesch (DE)
(74) Vertreter: Müller, Karl-Ernst
(86) Internationale Anmeldenummer: PCT/EP2003/013181
(87) Internationale Veröffentlichungsnummer: WO 2004/048160

(56) Entgegenhaltungen:
- FR-A- 2 614 852
- US-A- 4 451 087
- US-A- 4 611 854
- US-A- 4 652 012
- US-A- 5 211 694
- US-A- 5 823 628

## Beschreibung

Die Erfindung betrifft eine Befestigungsanordnung für einen an einem Fahrzeugteil zu befestigenden Gurtaufroller, wobei die Gehäuseplatte des Gurtaufrollergehäuses wenigstens eine Befestigungsöffnung zur Aufnahme einer das Fahrzeugteil in einer daran ausgebildeten Befestigungsöffnung erfassenden Schraubverbindung aufweist und das Gurtaufrollergehäuse gegenüber der Befestigungsöffnung des Fahrzeugteils drehbar angeordnet ist, damit sich der Gurtaufroller bei einem winklig zur Wellenachse abgehenden Gurtband selbsttätig in die Kraftwirkungsrichtung ausrichtet.

Eine Befestigungsanordnung mit den vorgenannten Merkmalen ist aus der FR 28 14 415 bekannt. Dabei geht es im einzelnen um die Befestigung eines Gurtaufrollers auf der rückseitigen Ablage eines Kraftfahrzeuges, wobei sich der von dem Gurtaufroller abrollbare Gurt ohne Zwischenschaltung einer Umlenkeinrichtung von der Hutablage zur Schulter des angeschnallten Insassen erstrecken soll. Hierdurch bedingt kommt es bei einem unter Berücksichtigung der Ablageposition des Gurtbandes montierten Gurtaufroller zu einem schrägen Gurtverlauf. Diesem Problem will die in der FR 28 14 415 beschriebene Befestigungsanordnung dadurch begegnen, daß das Gurtaufrollergehäuse nicht fest, sondern um die durch seine Befestigungsschraube definierte Achse schwenkbar mit dem Fahrzeug verbunden ist, wobei eine zweischenklige Feder mit einem Federende an dem Fahrzeugteil eingehängt ist und mit dem anderen Federende gegen das Gurtaufrollergehäuse drückt, so daß der Gurtaufroller in seiner Ausgangsposition vorgespannt ist und jeweils gegen die Federwirkung verschwenkt. Die bekannte Befestigungsanordnung ist hinsichtlich ihrer Montage aufwendig, da das Gurtaufrollergehäuse an dem Fahrzeugteil so zu befestigen ist, daß eine leichtgängige Drehung um die Achse der Befestigungsschraube ermöglicht ist. Ferner bedeutet die Montage der zusätzlich erforderlichen Feder einen weiteren Montageschritt.

Es hat sich ferner herausgestellt, daß eine praktisch bei jedem Anlege- bzw. Ablegevorgang des Gurtbandes erfolgende Nachführung des Gurtaufrollers nicht erforderlich ist; es reicht vielmehr zum Schutz des Gurtbandes wie auch des Gurtaufrollers selbst aus, wenn sich der Gurtaufroller unter Last auf den sich einstellenden Gurtzug ausrichtet. Auf diese Weise können insbesondere unter Lasteinwirkung entstehende Schäden an Gurtband und Gurtaufroller vermieden werden.

Der Erfindung liegt daher die Aufgabe zugrunde, eine Befestigungsanordnung mit den gattungsgemäßen Merkmalen derart auszubilden, daß der Gurtaufroller in einfacher Weise zu montieren ist und sich bei Belastung des Gurtbandes gegenüber seiner Befestigung am Fahrzeugteil verdreht und sich so mit dem auftretenden Gurtzug ausrichtet.

Die Lösung dieser Aufgabe ergibt sich einschließlich vorteilhafter Ausgestaltungen und Weiterbildungen der Erfindung aus dem Inhalt der Patentansprüche, welcher dieser Beschreibung nachgestellt sind.

Die Erfindung sieht vor, daß das Gurtaufrollergehäuse drehbar an einem mit dem Fahrzeugteil fest zu verbindenden Halteteil gehaltert und das Gurtaufrollergehäuse durch das Halteteil in einem Abstand zur Befestigungsöffnung des Fahrzeugteils gehalten und an dem Halteteil derart festgelegt ist, daß das Gurtaufrollergehäuse gegenüber dem Halteteil unter Überwindung eines voreingestellten Widerstandes drehbar ist. Damit beruht die Erfindung auf dem Grundgedanken, daß das Gurtaufrollergehäuse nicht mehr unmittelbar über das Befestigungsmittel mit dem Fahrzeugteil verbunden ist, sondern mittelbar unter Einschaltung eines seinerseits mit dem Fahrzeugteil fest verbundenen Halteteils, wobei durch die mit Hilfe des Halteteils bewirkte Einstellung eines Abstandes dafür Sorge getragen ist, daß sich der Gurtaufroller bei entsprechend auftretender Last gegenüber dem Halteteil verdreht und sich dadurch in der Belastungsrichtung ausrichtet. Mit der Erfindung ist ein wesentlicher Montagevorteil verbunden, weil das Halteteil ohne Rücksicht auf die im Belastungsfall hinsichtlich des Gurtaufrollers einzustellenden Bewegungsverhältnisse an dem Fahrzeugteil montiert werden kann. Da das Halteteil gegebenenfalls an dem Gurtaufrollergehäuse vormontierbar ist, können im Rahmen der Vormontage die Bewegungsverhältnisse zwischen Gurtaufrollergehäuse und Halteteil exakt eingestellt werden.

Die Einschaltung eines gesonderten Halteteils in die Befestigung des Gurtaufrollergehäuses, wobei das Halteteil seinerseits an dem Fahrzeugteil befestigt und das Gurtaufrollergehäuse an dem Halteteil befestigt ist, ergibt sich aus der US 5 211 694; das dabei vorgesehene Halteteil ist als Schockabsorber ausgebildet und dient dazu, unter Energieaufnahme eine Relativbewegbarkeit des Gurtaufrollergehäuses zum Fahrzeugteil einzurichten.

In einer ersten Ausführungsform der Erfindung ist vorgesehen, daß das Halteteil als ebenes Flachteil ausgebildet ist mit einer Öffnung zum Hindurchführen eines der Befestigung des Halteteils an dem Fahrzeugteil dienenden Befestigungsmittels und mit einer weiteren Öffnung zur drehbaren Befestigung des Gurtaufrollergehäuses an dem Halteteil. Bei dieser Ausführungsform wird der die Drehbewegung des Gurtaufrollergehäuses gegenüber dem Fahrzeugteil ermöglichende Abstand dadurch ausgebildet, daß bezogen auf die Befestigungsebene des Fahrzeugteils die Befestigung des Gurtaufrollergehäuses am Halteteil einerseits und die Befestigung des Halteteils am Fahrzeugteil andererseits mit seitlichem Abstand zueinander angeordnet sind. Hierbei kann vorgesehen sein, daß die Befestigung des Gurtaufrollergehäuses an dem Halteteil über einen die Öffnung des Halteteils und die Befestigungsöffnung der Gehäuseplatte des Gurtaufrollergehäuses durchgreifenden Niet erfolgt. Die Nietbefestigung gibt einerseits einen sicheren Halt des Gurtaufrollers am Halteteil und ermöglicht unter Last andererseits die gewünschte Drehbewegung.

In alternativen Ausführungsformen kann hinsichtlich der Zuordnung von Halteteil und der die Befestigungsöffnung aufweisenden Gehäuseplatte des Gurtaufrollergehäuses vorgesehen sein, daß das Halteteil auf der ebenen, mit der Befestigungsöffnung versehenen Gehäuseplatte des Gurtaufrollergehäuses aufliegt oder daß alternativ die zum Anschluß des Halteteils vorgesehene Gehäuseplatte des Gurtaufrollergehäuses einen abgekröpften Bereich zur Aufnahme des zugeordneten Endes des Halteteils aufweist und die Abkröpfung gemeinsam mit den Außenkanten des Halteteils eine Begrenzung für die Drehbewegung des Gurtaufrollergehäuses gegenüber dem Halteteil bildet.

Es kann ferner vorgesehen sein, daß das Halteteil einen von ihm winklig abstehenden und in eine in dem Fahrzeugteil ausgebildete weitere Öffnung einführbaren Fixieransatz aufweist, wie dies im Stand der Technik an sich bekannt ist.

Gemäß einer zweiten Ausführungsform der Erfindung ist vorgesehen, daß das Halteteil aus einer die Befestigungsöffnung der Gehäuseplatte des Gurtaufrollergehäuses durchgreifenden und mit einem endseitigen Gewinde in der Befestigungsöffnung des Fahrzeugteils festzulegenden Bundschraube besteht, deren Bund sich gegen das Fahrzeugteil abstützt, wobei das Gurtaufrollergehäuse mit seiner Befestigungsöffnung auf dem Bund der Bundschraube sitzt und durch den Schraubenkopf der Bundschraube gehalten ist und auf dem Bund der Bundschraube zwischen Fahrzeugteil und Gurtaufrollergehäuse ein vorgespanntes Federelement angeordnet ist. Bei dieser Ausführungsform wird der die Drehbewegung des Gurtaufrollergehäuses ermöglichende Abstand durch den Bund der als Befestigungsmittel eingesetzten Bundschraube eingestellt, wobei diese Bundschraube gleichzeitig als Halteteil wie auch als Befestigungsmittel dient. Die Bundschraube kann bei der Montage des Gurtaufrollergehäuses mit dem erforderlichen Drehmoment angezogen werden, ohne daß die anschließende Drehbewegungsmöglichkeit des Gurtaufrollergehäuses gegenüber der Bundschraube beeinträchtigt wird. Der zur Festlegung des Gurtaufrollergehäuses erforderliche Widerstand wird durch die Anordnung des vorgespannten Federelementes bewirkt, welches nach einem Ausführungsbeispiel der Erfindung aus einer Tellerfeder bestehen kann.

In einer dritten Ausführungsform ist vorgesehen, daß das Halteteil als U-förmiges und auf die die Befestigungsöffnung aufweisende Gehäuseplatte aufsteckbares und die Gehäuseplatte zwischen seinen U-Platten aufnehmendes Bauteil ausgebildet ist, wobei die in den U-Platten des Halteteils befindlichen Öffnungen mit der Befestigungsöffnung der Gehäuseplatte fluchten und eine der U-Platten des Halteteils bei der Montage des Gurtaufrollers am Fahrzeugteil zwischen dem Fahrzeugteil und der Gehäuseplatte des Gurtaufrollergehäuses zu liegen kommt. Bei dieser Ausführungsform wird der die Drehbewegung des Gurtaufrollergehäuses sicherstellende Abstand dadurch vorgegeben, daß eine der beiden U-Platten des Halteteils bei der Montage des Gurtaufrollers mit vormontiertem Halteteil zwischen dem Fahrzeugteil und der Gehäuseplatte zu liegen kommt und so den Abstand festlegt.

Zur Ausbildung der Befestigung ist nach einem Ausführungsbeispiel der Erfindung vorgesehen, daß eine mit einer in der Befestigungsöffnung des Fahrzeugteils ausgebildeten Befestigungsschraube verschraubbare Befestigungsmutter als Bundmutter ausgebildet ist, deren Bundhöhe der Materialstärke der Gehäuseplatte des Gurtaufrollergehäuses einschließlich der Materialstärke der zwischen Fahrzeugteil und Gehäuseplatte liegenden U-Platte des Halteteils entspricht, wobei zur Festlegung des Drehwiderstandes zusätzlich vorgesehen sein kann, daß in dem durch die zwischen Fahrzeugteil und Gehäuseplatte des Gurtaufrollergehäuses liegende U-Platte des Halteteils gebildeten Zwischenraum ein Federelement angeordnet ist; dieses Federelement ist nach einem Ausführungsbeispiel der Erfindung wiederum als Tellerfeder ausgebildet.

Zur Verbesserung der Montagemöglichkeit ist nach einem Ausführungsbeispiel der Erfindung vorgesehen, daß an der dem Fahrzeugteil abgewandten U-Platte des Halteteils die darin ausgebildete Öffnung wenigstens teilweise umschließende Vorsprünge ausgebildet sind, die als Montagehalterung und Verdrehsicherung für eine Befestigungsmutter dienen; alternativ kann vorgesehen sein, daß an der dem Fahrzeugteil abgewandten U-Platte des Halteteils in Ausrichtung mit der daran ausgebildeten Öffnung eine Befestigungsmutter fest angebracht ist.

In einer an sich bekannten Weise kann das Halteteil einen von ihm winklig abstehenden Fixieransatz zum Eingriff in eine zugeordnete weitere Öffnung des Fahrzeugteils aufweisen, wobei bei einer solchen Ausbildung des Halteteils zusätzlich vorgesehen sein kann, daß das Halteteil mit seinem Fixieransatz die Gehäuseplatte des Gurtaufrollers in einer zugeordneten weiteren Ausnehmung durchgreift, so daß der Gurtaufroller zusätzlich fixiert ist. Die Anordnung eines derartigen Fixieransatzes zur undrehbaren Festlegung des Gurtaufrollers an einem Fahrzeugteil ist aus der FR 2 614 852 bereits bekannt.

Nach Ausführungsbeispielen der Erfindung kann vorgesehen sein, daß das Halteteil aus Metall besteht und eine am Halteteil angeordnete Befestigungsmutter als mit dem Halteteil fest verbundene Schweißmutter ausgebildet ist oder daß das Halteteil aus Kunststoff besteht und eine an dem Halteteil vorgesehene Befestigungsmutter einstückig mit dem Halteteil verbunden ist.

In einer weiteren Ausführungsform der Erfindung ist vorgesehen, daß das Halteteil aus einer die Befestigungsöffnung der Gehäuseplatte des Gurtaufrollergehäuses mit einem Bund durchgreifenden und auf eine am Fahrzeugteil verankerte Befestigungsschraube aufschraubbaren Bundmutter besteht, deren Bund sich gegen das Fahrzeugteil bzw. die Befestigungsschraube abstützt, wobei das Gurtaufrollergehäuse mit seiner Befestigungsöffnung drehbar auf den Bund der Bundmutter sitzt und wobei auf der dem Fahrzeugteil abgewandten Seite der Gehäuseplatte ein auf den Bund der Bundmutter gehaltertes Halteblech angeordnet ist, welches mit einem von ihm winklig abstehenden Fixieransatz eine in der Gehäuseplatte angeordnete weitere Ausnehmung durchgreift und in einer in dem Fahrzeugteil ausgebildeten weiteren Öffnung drehfest festlegbar ist, und daß das Gurtaufrollergehäuse mittels einer in die Ausnehmung hineinragenden und durch einen in dem Fixieransatz ausgebildeten Durchbruch geführten Zunge gegenüber dem Halteblech festgelegt und unter Last infolge Verformung der den Fixieransatz durchgreifenden Zunge verdrehbar ist. Bei diesem Ausführungsbeispiel wird der Abstand des Gurtaufrollergehäuses durch den Bund der als Befestigungsmittel eingesetzten Bundmutter bewirkt, die sich entweder an dem fahrzeugfesten Teil abstützt oder mit der Befestigungsschraube auf Block geschraubt wird, so daß das Gurtaufrollergehäuse um den Bund der Bundmutter drehbar ist. Es versteht sich, daß auch im Umkehrschluß an dem Gurtaufrollergehäuse eine Bundschraube angebracht sein kann, die in eine entsprechende, gegebenenfalls als Bundmutter ausgebildete Schweißmutter des Fahrzeugteils einschraubbar ist. Zur Festlegung des drehbar angeordneten Gurtaufrollergehäuses und zur Einstellung des gewollten Widerstands gegen die Verdrehung ist das Halteblech vorgesehen, welches das Gurtaufrollergehäuse mit einem T-förmigen Fixieransatz durchgreift und dadurch gegenüber dem Fahrzeugteil festgelegt ist. Zusätzlich durchgreift das Gurtaufrollergehäuse mit einer in die dem Durchgriff des Fixieransatzes dienenden Ausnehmung hineinragenden und dabei den Fixieransatz in einem in diesem ausgebildeten Durchbruch geführten Zunge, so daß hierdurch das Gurtaufrollergehäuse gegenüber dem Halteblech festgelegt ist. Bei auftretender Last verformt sich die Zunge gegenüber dem Fixieransatz des Halteblechs, so daß eine Drehung des Gurtaufrollergehäuses möglich ist; diese Drehbewegung ist auch im Wege einer Sichtbarmachung der Drehbewegung an der verformten Zunge ablesbar.

In der Zeichnung sind Ausführungsbeispiele der Erfindung wiedergegeben, welche nachstehend beschrieben sind. Es zeigen:
- Fig. 1: einen Gurtaufroller mit angeschlossenem, vormontierten Halteteil in einer Gesamtansicht,
- Fig. 2: den Gegenstand der Fig. 1 in einer anderen Ausführungsform,
- Fig. 3: eine Befestigungsanordnung mit einem als Bundschraube ausgebildeten Halteteil in einer schematischen Schnittdarstellung,
- Fig. 4: ein auf die Gehäuseplatte eines Gurtaufrollergehäuses aufsteckbares Halteteil in einer Perspektivansicht,
- Fig. 5: den Gegenstand der Fig. 4 in einem anderen Blickwinkel,
- Fig. 6: den Zuschnitt für die Herstellung des Halteteils gemäß Fig. 4 und 5 in einer Draufsicht,
- Fig. 7: eine Befestigungsanordnung mit Halteteil in einer schematischen Schnittdarstellung.
- Fig. 8: ein Gurtaufrollergehäuse mit vormontiertem Halteteil in einer Vorderansicht,
- Fig. 9: den Gegenstand der Figur 8 in einer Seitenansicht nach Linie IX - IX in Figur 8,
- Fig. 10: ein weiteres Ausführungsbeispiel der Befestigungsanordnung in einer perspektivischen Gesamtansicht,
- Fig. 11: das Gurtaufrollergehäuse gemäß Figur 10 mit vormontiertem Halteblech in einer Draufsicht,
- Fig. 12: den Gegenstand der Figur 11 in einer geschnittenen Seitenansicht nach Linie XII - XII in Figur 11.

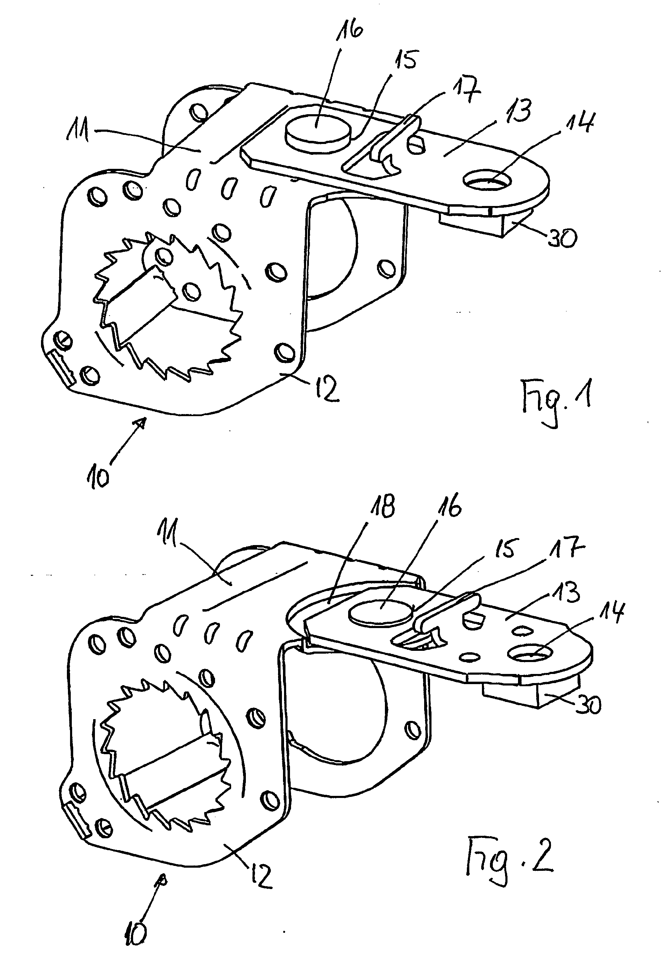

In den Figuren 1 und 2 ist für ein erstes Ausführungsbeispiel der Erfindung ein U-förmiges Gurtaufrollergehäuse dargestellt mit einer ebenen und zur Befestigung des Gurtaufrollergehäuses an einem Fahrzeugteil heranzuziehenden Gehäuseplatte und mit U-förmigen Seitenschenkeln 12. Die Merkmale des Gurtaufrollergehäuses im übrigen sind von der Erfindung nicht beeinflußt und insoweit aus dem Stand der Technik bekannt.

Zur Befestigung des Gurtaufrollergehäuses 10 ist ein Halteteil 13 vorgesehen, welches als ebenes Flachteil ausgebildet ist und an seinem einen Ende eine Öffnung 14 aufweist, durch welche ein Befestigungsmittel zur Befestigung des Halteteils 13 mit einem nicht dargestellten Fahrzeugteil führbar ist. Bei dem Befestigungsmittel kann es sich um eine mit dem Fahrzeugteil verbundene Befestigungsschraube handeln, die in eine an dem Halteteil 13 angebrachte Befestigungsmutter 30 einschraubbar ist. An dem anderen Ende des ebenen Halteteils 13 ist eine weitere Öffnung 15 ausgebildet, mit welcher das Halteteil 13 an der Gehäuseplatte 11 des Gurtaufrollergehäuses 10 zu befestigen ist, und zwar mittels eines die weitere Öffnung 15 und eine in der Gehäuseplatte 11 des Gurtaufrollergehäuses 10 vorgesehene Befestigungsöffnung durchgreifenden Niets. Zusätzlich weist das Halteteil 13 einen von ihm winklig abstehenden, an seinem Ende T-förmig ausgebildeten Fixieransatz 17 auf, der bei der Befestigung des Halteteils 13 an einem Fahrzeugteil in eine weitere an dem Fahrzeugteil ausgebildete Öffnung einführbar ist, wobei diese Öffnung derart ausgebildet ist, daß sich ein formschlüssiges Verhaken des Fixieransatzes 17 mit dem Fahrzeugteil ergibt; eine derartige Maßnahme ist aus dem Stand der Technik hinlänglich bekannt.

Die in den Figuren 1 und 2 dargestellten Ausführungbeispiele unterscheiden sich jeweils darin, daß bei dem zu Figur 1 dargestellten Ausführungsbeispiel das ebene Halteteil 13 auf die Gehäuseplatte 11 des Gurtaufrollergehäuses 10 aufgelegt ist, während bei dem Ausführungsbeispiel nach Fig. 2 die Gehäuseplatte 11 einen abgekröpften Bereich 18 aufweist, in welchen das diesbezügliche Ende des Halteteils 13 einlegbar ist.

Soweit die Befestigung des Halteteils 13 an der Gehäuseplatte 11 des Gurtaufrollergehäuses 10 über den Niet 16 erfolgt, sorgt dieser Niet zunächst für eine feste Verbindung des Gurtaufrollergehäuses 10 mit dem Halteteil 13; kommt es bei einer schräg einwirkenden Zugbelastung zu einem auf den Niet einwirkenden Drehmoment, so kann sich das Gurtaufrollergehäuse 10 unter Last um die Achse des Niets 16 drehen. Bei dem in Fig. 2 dargestellten Ausführungsbeispiel kann dabei das in dem abgekröpften Bereich 18 liegende Ende des Halteteils 13 einen Anschlag für die Drehbewegung des Gurtaufrollergehäuses 10 bilden.

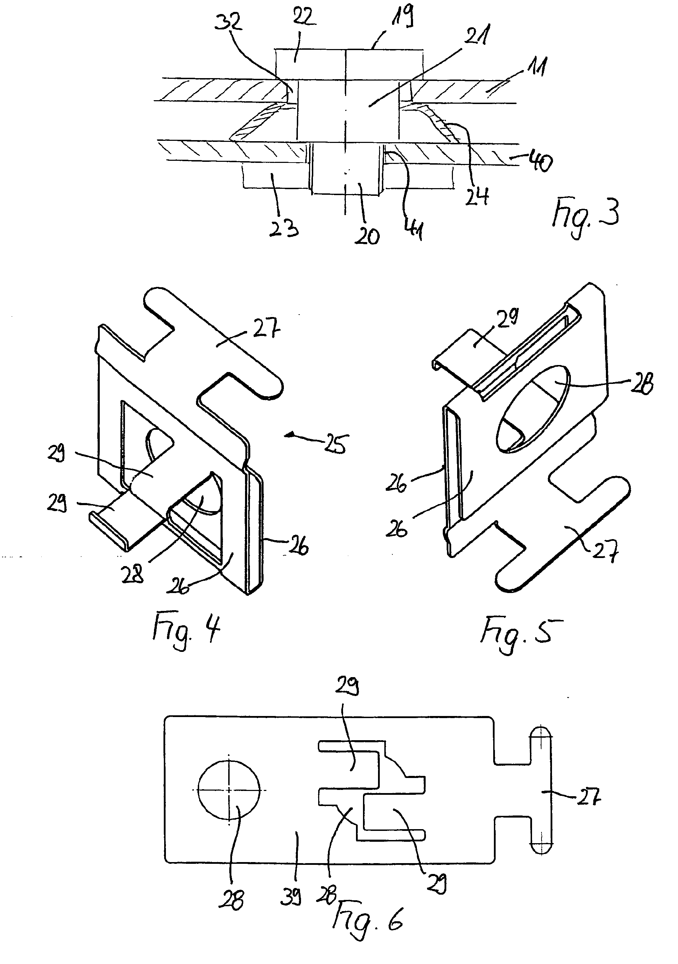

Bei dem in Fig. 3 schematisch dargestellten Ausführungsbeispiel ist das Halteteil als Bundschraube 19 ausgebildet, so daß bei diesem Ausführungsbeispiel die Bundschraube 19 sowohl als Halteteil für die drehbare Befestigung des Gurtaufrollergehäuses als auch als Befestigungsmittel selbst dient. Die Bundschraube ist mit dem an ihrem Ende ausgebildeten Gewindebereich 20 durch eine in dem Fahrzeugteil 40 ausgebildete Befestigungsöffnung 41 hindurchsteckbar und mit einer innenseitig des Fahrzeugteils 40 befestigten Schweißmutter 23 einschraubbar, bis sich der Bund 21 der Bundschraube 19 auf dem Fahrzeugteil 40 abstützt. Auf dem Bund 21 der Bundschraube 19 ist das Gurtaufrollergehäuse mit der in dessen Gehäuseplatte 11 ausgebildeten Befestigungsöffnung 32 drehbar angeordnet, wobei die Gehäuseplatte 11 durch den Schraubenkopf 22 der Bundschraube 19 auf dieser festgelegt wird. Dabei ist die Befestigungsöffnung 32 der Gehäuseplatte 11 so bemessen, daß die Gehäuseplatte 11 um den Bund 21 der Bundschraube 19 drehbar ist. Zum Zwecke der Entklapperung wie auch zur Einstellung des erforderlichen Drehwiderstandes ist auf dem Bund 21 der Bundschraube 19 ein sich zwischen Fahrzeugteil 40 und Gehäuseplatte 11 abstützenden Federelement 24, vorzugsweise in Form einer Tellerfeder, angeordnet.

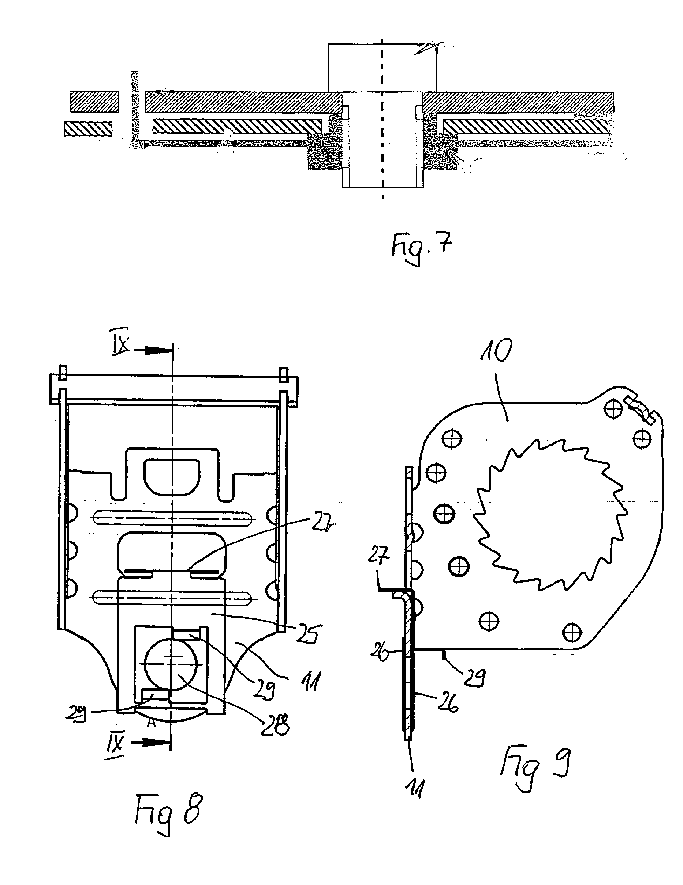

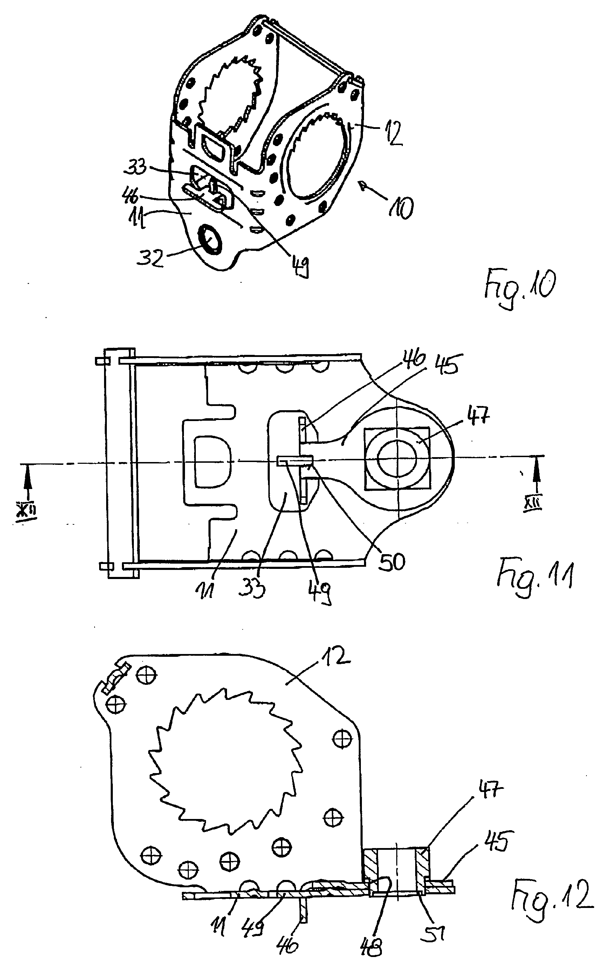

Bei dem in den Figuren 4 bis 9 dargestellten Ausführungsbeispiel ist das Halteteil 25 durch Biegen aus einem in Figur 6 dargestellten flachen Zuschnitt gebildet, wobei das Halteteil 25 eine U-förmige Gestalt mit parallel zueinander angeordneten U-Platten 26 erhält. An einem Ende des ebenen Zuschnitts 39 wird ein bereits zu dem Ausführungsbeispiel nach Figuren 1 und 2 beschriebener Fixieransatz 27 abgebogen. Ferner werden durch Herausbiegen aus dem ebenen Zuschnitt 39 Vorsprünge 29 geschaffen, wobei durch das Herausbiegen der Vorsprünge 29 in der anderen U-Platte die zugehörige Öffnung 28 ausgebildet wird; die die durch das Herausbiegen freigemachte Öffnung 28 umgebenden Vorsprünge 29 dienen, wie später noch erläutert wird, als Montagehalterung und Verdrehsicherung für eine an dem Halteteil 25 festzulegende Befestigungsmutter. Wie sich insbesondere aus den Figuren 7 bis 9 ergibt, wird das U-förmige Halteteil auf die Gehäuseplatte 11 eines Gurtaufrollergehäuses 10 derart aufgeschoben, daß die deckungsgleichen Öffnungen 28 des Halteteils 25 in eine Flucht mit der Befestigungsöffnung 32 der Gehäuseplatte 11 des Gurtaufrollergehäuses 10 gelangen; der an dem Halteteil 25 befindliche Fixieransatz 27 durchgreift dabei die Gehäuseplatte 11 des Gurtaufrollergehäuses 10 in einer weiteren, in der Gehäuseplatte 11 ausgebildeten Ausnehmung 33. Wie sich dabei insbesondere aus Fig. 7 entnehmen läßt, befindet sich in der Befestigungsöffnung 41 des Fahrzeugteils 40 eine Befestigungsschraube 31, auf die das Halteteil 25 mit seinen Öffnungen 28 aufgesteckt wird, wobei die Befestigungsschraube 31 mit der an dem Halteteil 25 vormontierten Befestigungsmutter 30 verschraubbar ist. Da sich bei dieser Montage die eine U-Platte 26 zwischen die Gehäuseplatte 11 und das Fahrzeugteil 40 legt, ist das Gurtaufrollergehäuse gegenüber dem Halteteil frei drehbar. Der Drehwiderstand kann dabei durch ein nicht weiter dargestelltes, in dem Zwischenraum zwischen Halteteil und Fahrzeugteil angeordnetes Federelement verstärkt werden.

Bei dem in den Figuren 10 bis 12 dargestellten Ausführungsbeispiel ist auf der der Anlageseite des Gurtaufrollergehäuses 10 an dem nicht dargestellten fahrzeugfesten Teil abgewandten Oberseite der Gehäuseplatte 11 ein Halteblech 45 angeordnet, welches mit einem von diesem abstehenden, T-förmig ausgebildeten Fixieransatz 46 die in der Gehäuseplatte 11 ausgebildete weitere Ausnehmung 33 des Gurtaufrollergehäuses durchgreift und bis in die Ebene des der Befestigung dienenden Fahrzeugteils vorsteht; hier wird der T-förmige Fixieransatz in einer Öffnung des Fahrzeugteils festgelegt.

Zur Befestigung des Gurtaufrollergehäuses 10 ist eine die Befestigungsöffnung 32 der Gehäuseplatte 11 durchgreifende und gleichzeitig auch eine entsprechende fluchtende Öffnung des Fixieransatzes 46 durchgreifende Bundmutter 47 aufgesetzt, auf deren Bund 48 die Gehäuseplatte 11 des Gurtaufrollergehäuses 10 angeordnet ist derart, daß das Gurtaufrollergehäuse 10 um den Bund 48 drehbar ist. Soweit die Bundmutter 47 auch das Halteblech 45 durchdringt, ist das Halteblech seinerseits über den Fixieransatz 46 drehfest festgelegt. Die Bundmutter 47 hat eine Ausnehmung 51 zur Aufnahme des betreffenden Endes einer Befestigungsschraube, mit der die Bundmutter 47 auf Block verschraubt wird, so daß keine Klemmwirkung hinsichtlich der drehbar zu halternden Gehäuseplatte 11 entsteht.

Um das Gurtaufrollergehäuse 10 zunächst auf dem Bund 48 der Bundmutter 47 festzulegen, ist in der Ebene der Gehäuseplatte 11 an dem Gurtaufrollergehäuse 10 eine in die weitere Ausnehmung 33 hineinragende Zunge 49 vorgesehen, die den durch die Ausnehmung 33 reichenden Fixieransatz 46 in einem Durchbruch 50 durchgreift und dabei mit einem Abschnitt über den Fixieransatz 46 übersteht und in die Ausnehmung 33 hineinragt. Insofern ist das Gurtaufrollergehäuse 10 mit der fest an ihm ausgebildeten Zunge 49 an dem Halteblech 45 zunächst drehfest festgelegt. Kommt es bei entsprechender Belastung durch schräg angreifenden Gurtbandzug zu einer Verdrehung des Gurtaufrollergehäuses 10 um den Bund 48 der Bundmutter 47, so wird diese Drehbewegung durch die Verformung der Zunge 49 in dem Durchbruch 50 des Fixieransatzes 46 ermöglicht, wobei durch den Verformungswiderstand gleichzeitig auch der der Drehbewegung entgegenzubringende Widerstand gebildet ist. Weiterhin ist das Ausmaß der Drehbewegung des Gurtaufrollergehäuses 10 gegenüber dem Halteblech 45 durch die Stellung der verformten Zunge 49 gegenüber dem Fixieransatz 46 bzw. in der weiteren Ausnehmung 33 feststellbar.

## Patentansprüche

1. Befestigungsanordnung für einen an einem Fahrzeugteil zu befestigenden Gurtaufroller, wobei die Gehäuseplatte des Gurtaufrollergehäuses wenigstens eine Befestigungsöffnung zur Aufnahme einer das Fahrzeugteil in einer daran ausgebildeten Befestigungsöffnung erfassenden Schraubverbindung aufweist und das Gurtaufrollergehäuse gegenüber der Befestigungsöffnung des Fahrzeugteils drehbar angeordnet ist, damit sich der Gurtaufroller bei einem winklig zur Wellenachse abgehenden Gurtband selbsttätig in die Kraftwirkungsrichtung ausrichtet, **dadurch gekennzeichnet, daß** das Gurtaufrollergehäuse (10) drehbar an einem mit dem Fahrzeugteil (40) fest zu verbindenden Halteteil (13, 19, 25) gehaltert und das Gurtaufrollergehäuse (10) durch das Halteteil (13, 19, 25) in einem Abstand zur Befestigungsöffnung (41) des Fahrzeugteils (40) gehalten und an dem Halteteil (13, 19, 25) derart festgelegt ist, daß das Gurtaufrollergehäuse (10) gegenüber dem Halteteil (13, 19, 25) unter Überwindung eines voreingestellten Widerstandes drehbar ist.

2. Befestigungsanordnung nach Anspruch 1, **dadurch gekennzeichnet, daß** das Halteteil (13) als ebenes Flachteil ausgebildet ist mit einer Öffnung (14) zum Hindurchführen eines der Befestigung des Halteteils (13) an dem Fahrzeugteil (40) dienenden Befestigungsmittels und mit einer weiteren Öffnung (15) zur drehbaren Befestigung des Gurtaufrollergehäuses (10) an dem Halteteil (13).

3. Befestigungsanordnung nach Anspruch 2, **dadurch gekennzeichnet, daß** die Befestigung des Gurtaufrollergehäuses (10) an dem Halteteil (13) über einen die Öffnung (15) des Halteteils (13) und die Befestigungsöffnung (32) der Gehäuseplatte (11) des Gurtaufrollergehäuses (10) durchgreifenden Niet (16) erfolgt.

4. Befestigungsanordnung nach Anspruch 2 oder 3, **dadurch gekennzeichnet, daß** das Halteteil (13) auf der ebenen, mit der Befestigungsöffnung (32) versehenen Gehäuseplatte (11) des Gurtaufrollergehäuses (10) aufliegt.

5. Befestigungsvorrichtung nach Anspruch 2 oder 3, **dadurch gekennzeichnet, daß** die zum Anschluß des Halteteils (13) vorgesehene Gehäuseplatte (11) des Gurtaufrollergehäuses (10) einen abgekröpften Bereich (18) zur Aufnahme des zugeordneten Endes des Halteteils (13) aufweist und die Abkröpfung gemeinsam mit den Außenkanten des Halteteils (13) eine Begrenzung für die Drehbewegung des Gurtaufrollergehäuses (10) gegenüber dem Halteteil (13) bildet.

6. Befestigungsanordnung nach einem der Ansprüche 2 bis 5, **dadurch gekennzeichnet, daß** das Halteteil (13) einen von ihm winklig abstehenden und in eine in dem Fahrzeugteil (40) ausgebildete weitere Öffnung einführbaren Fixieransatz (17) aufweist.

7. Befestigungsanordnung nach Anspruch 1, **dadurch gekennzeichnet, daß** das Halteteil aus einer die Befestigungsöffnung (32) der Gehäuseplatte (11) des Gurtaufrollergehäuses (10) durchgreifenden und mit einem endseitigen Gewinde (20) in der Befestigungsöffnung (41) des Fahrzeugteils (40) festzulegenden Bundschraube (19) besteht, deren Bund (21) sich gegen das Fahrzeugteil (40) abstützt, wobei das Gurtaufrollergehäuse (10) mit seiner Befestigungsöffnung (32) auf dem Bund (21) der Bundschraube (19) sitzt und durch den Schraubenkopf (22) der Bundschraube (19) gehalten ist und auf dem Bund (21) der Bundschraube (19) zwischen Fahrzeugteil (40) und Gurtaufrollergehäuse (10) ein vorgespanntes Federelement (24) angeordnet ist.

8. Befestigungsanordnung nach Anspruch 7, **dadurch gekennzeichnet, daß** das Federelement (24) aus einer Tellerfeder besteht.

9. Befestigungsanordnung nach Anspruch 1, **dadurch gekennzeichnet, daß** das Halteteil (25) als U-förmiges und auf die die Befestigungsöffnung (32) aufweisende Gehäuseplatte (11) aufsteckbares und die Gehäuseplatte (11) zwischen seinen U-Platten (26) aufnehmendes Bauteil ausgebildet ist, wobei die in den U-Platten (26) des Halteteils (25) befindlichen Öffnungen (28) mit der Befestigungsöffnung (32) der Gehäuseplatte (11) fluchten und eine der U-Platten (26) des Halteteils (25) bei der Montage des Gurtaufrollers am Fahrzeugteil (40) zwischen dem Fahrzeugteil (40) und der Gehäuseplatte (11) des Gurtaufrollergehäuses (10) zu liegen kommt.

10. Befestigungsanordnung nach Anspruch 9, **dadurch gekennzeichnet, daß** eine mit einer in der Befestigungsöffnung (41) des Fahrzeugteils (40) ausgebildeten Befestigungsschraube (31) verschraubbare Befestigungsmutter (30) als Bundmutter ausgebildet ist, deren Bundhöhe der Materialstärke der Gehäuseplatte (11) des Gurtaufrollergehäuses (10) einschließlich der Materialstärke der zwischen Fahrzeugteil (40) und Gehäuseplatte (11) liegenden U-Platte (26) des Halteteils (25) entspricht.

11. Befestigungsanordnung nach Anspruch 9 oder 10, **dadurch gekennzeichnet, daß** in dem durch die zwischen Fahrzeugteil (40) und Gehäuseplatte (11) des Gurtaufrollergehäuses (10) liegende U-Platte (26) des Halteteils (25) gebildeten Zwischenraum ein Federelement angeordnet ist.

12. Befestigungsanordnung nach Anspruch 11, **dadurch gekennzeichnet, daß** das Federelement als Tellerfeder ausgebildet ist.

13. Befestigungsanordnung nach einem der Ansprüche 9 bis 12, **dadurch gekennzeichnet, daß** an der dem Fahrzeugteil (40) abgewandten U-Platte (26) des Halteteils (25) die darin ausgebildete Öffnung (28) wenigstens teilweise umschließende Vorsprünge (29) ausgebildet sind, die als Montage-halterung und Verdrehsicherung für eine Befestigungsmutter (30) dienen.

14. Befestigungsanordnung nach einem der Ansprüche 9 bis 12, **dadurch gekennzeichnet, daß** an der dem Fahrzeugteil (40) abgewandten U-Platte (26) des Halteteils (25) in Ausrichtung mit der daran ausgebildeten Öffnung (28) eine Befestigungsmutter (30) fest angebracht ist.

15. Befestigungsanordnung nach einem der Ansprüch 9 bis 14, **dadurch gekennzeichnet, daß** das Halteteil (25) einen von ihm winklig abstehenden Fixieransatz (27) zum Eingriff in eine zugeordnete weitere Öffnung des Fahrzeugteils (40) aufweist.

16. Befestigungsanordnung nach Anspruch 15, **dadurch gekennzeichnet, daß** das Halteteil (25) mit seinem Fixieransatz (27) die Gehäuseplatte (11) des Gurtaufrollers in einer zugeordneten weiteren Ausnehmung (33) durchgreift.

17. Befestigungsanordnung nach wenigstens einem der Ansprüche 1 bis 16, **dadurch gekennzeichnet, daß** das Halteteil (13, 25) aus Metall besteht und eine am Halteteil (25) angeordnete Befestigungsmutter (30) als mit dem Halteteil fest verbundene Schweißmutter ausgebildet ist.

18. Befestigungsanordnung nach wenigstens einem der Ansprüche 1 bis 16, **dadurch gekennzeichnet, daß** das Halteteil (13, 25) aus Kunststoff besteht und eine an dem Halteteil (25) vorgesehene Befestigungsmutter (30) einstückig mit dem Halteten verbunden ist.

19. Befestigungsanordnung nach Anspruch 1, **dadurch gekennzeichnet, daß** das Halteteil aus einer die Befestigungsöffnung (32) der Gehäuseplatte (11) des Gurtaufrollergehäuses (10) mit einem Bund (48) durchgreifenden und auf eine am Fahrzeugteil (40) verankerte Befestigungsschraube aufschraubbaren Bundmutter (47) besteht, deren Bund (48) sich gegen das Fahrzeugteil (40) bzw. die Befestigungsschraube abstützt, wobei das Gurtaufrollergehäuse (10) mit seiner Befestigungsöffnung (32) drehbar auf den Bund (48) der Bundmutter (47) sitzt und wobei auf der dem Fahrzeugteil (40) abgewandten Seite der Gehäuseplatte (11) ein auf den Bund (48) der Bundmutter (47) gehaltertes Halteblech (45) angeordnet ist, welches mit einem von ihm winklig abstehenden Fixieransatz (46) eine in der Gehäuseplatte (11) angeordnete weitere Ausnehmung (33) durchgreift und in einer in dem Fahrzeugteil (40) ausgebildeten weiteren Öffnung drehfest festlegbar ist, und daß das Gurtaufrollergehäuse (10) mittels einer in die Ausnehmung (33) hineinragenden und durch einen in dem Fixieransatz (46) ausgebildeten Durchbruch (50) geführten Zunge (49) gegenüber dem Halteblech (45) festgelegt und unter Last infolge Verformung der den Fixieransatz (46) durchgreifenden Zunge (49) verdrehbar ist.

## Claims

1. Fixing device for a seat belt retractor housing to be attached to a vehicle part, whereby the housing plate of the seat belt retractor housing has at least one fixing opening for receiving a screw connection engaging the vehicle part in a fixing opening formed thereon and the seat belt retractor housing is rotatably disposed relative to the fixing opening of the vehicle part, so that the seat belt retractor housing is oriented automatically in a direction of a force of a belt which moves at an angle with respect to the axis of the shaft, **characterized in that** the seat belt retractor housing (10) is rotatably held on a holder part (13, 19, 25) to be fixedly connected with the vehicle part (40) and the seat belt retractor housing (10) is held by means of the holder part (13, 19, 25) at a distance to the fixing opening (41) of the vehicle part (40) and is fixed to the holder part (13, 19, 25) in such a way that the seat belt retractor housing (10) is rotatable relative to the holder part (13, 19, 25) in an opposite direction to a pre-set resistance.

2. Fixing device according to claim 1, **characterized in that** the holder part (13) is formed as a flat part with an opening (14) for guiding through of an attachment means serving to attach the holder part (13) to the vehicle part (40) and with a further opening (15) for rotatable attachment of the seat belt retractor housing (10) to the holder part (13).

3. Fixing device according to claim 2, **characterized in that** the attachment of the seat belt retractor housing (10) to the holder part (13) takes place by means of a rivet (16) penetrating an opening (15) of the holder part (13) and the fixing opening (32) of the housing plate (11) of the seat belt retractor housing (10).

4. Fixing device according to claim 2 or 3, **characterized in that** the holder part (13) rests on the flat housing plate (11) of the seat belt retractor housing (10) provided with the fixing opening (32).

5. Fixing device according to claim 2 or 3, **characterized in that** the housing plate (11) of the seat belt retractor housing (10) provided for connection of the holder part (13) has an off-set region (18) for receiving the associated end of the holder part (13) and the off-set region, together with the outer edges of the holder part (13), form a limitation for the rotational movement of the seat belt retractor housing (10) relative to the holder part (13).

6. Fixing device according to one of claims 2 through 5,
**characterized in that** the holder part (13) has a fixing shoulder (17) projecting at an angle from it and insertable into a further opening formed in the vehicle part (40).

7. Fixing device according to claim 1, **characterized in that** the holder part comprises a collar screw (19) that penetrates through the fixing opening (32) of the housing plate (11) of the seat belt retractor housing (10) and that is fixed with an end threading (20) in the fixing opening (41) of the vehicle part (40), whose collar (21) braces against the vehicle part (40), whereby the seat belt retractor housing (10) sits with its fixing opening (32) on the collar (21) of the collar screw (19) and is held by means of the screw head (22) of the collar screw (19), and a prestressed spring element (24) is arranged on the collar (21) of the collar screw (19) between the vehicle part (40) and the seat belt retractor housing (10).

8. Fixing device according to claim 7, **characterized in that** the spring element (24) comprises a plate spring.

9. Fixing device according to claim 1, **characterized in that** the holder part (25) is formed as a U-shaped component that is attachable onto the housing plate (11) having the fixing opening (32) and accommodates the housing plate (11) between its U-plates (26), whereby the openings (28) located in the U-plates (26) of the holder part (25) are flush with the fixing opening (32) of the housing plate (11) and one of the U-plates (26) of the holder part (25), upon mounting of the seat belt retractor housing onto the vehicle part (40), rests between the vehicle part (40) and the housing plate (11) of the seat belt retractor housing (10).

10. Fixing device according to claim 9, **characterized in that** a fixing nut (30) that can be screwed via a fixing screw (31) into the fixing opening (41) formed in the vehicle part is formed as a collar nut, whose collar height corresponds to the material thickness of the housing plate (11) of the seat belt retractor housing (10) inclusive of the material thickness of the U-plate (26) of the holder part (25) lying between the vehicle part (40) and the housing plate (11).

11. Fixing device according to claim 9 or 10, **characterized in that** in the intermediate space formed by the U-plate of the holder part (25) lying between the vehicle part (40) and housing plate (11) of the seat belt retractor housing (10), a spring element is arranged.

12. Fixing device according to claim 11, **characterized in that** the spring element is formed as a plate spring.

13. Fixing device according to one of claims 9 through 12, **characterized in that** on the U-plate of the holder part (25) facing away from the vehicle part (40), projections (29) are formed which at least partially surround the opening (28) formed therein, and which serve as a mounting holder and anti-twist device for a fixing nut (30).

14. Fixing device according to one of claims 9 through 12, **characterized in that** on the U-plate (26) of the holder part (25) facing away from the vehicle part (40), a fixing nut (30) is fixedly mounted to be oriented with the opening (28) formed thereon.

15. Fixing device according to one of claims 9 through 14, **characterized in that** the holder part (25) has a fixing shoulder (27) projecting from it at an angle for engagement in an associated further opening of the vehicle part (40).

16. Fixing device according to claim 15, **characterized in that** the holder part (25) penetrates with its fixing shoulder (27) the housing plate (11) of the seat belt retractor housing in an associated further recess (33).

17. Fixing device according to at least one of claims 1 through 16, **characterized in that** the holder part (13, 25) comprises metal and a fixing nut (30) arranged on the holder part (25) is formed as a weld nut that is fixedly connected with the holder part.

18. Fixing device according to at least one of claims 1 though 16, **characterized in that** the holder part (13, 25) comprises plastic and a fixing nut (30) provided on the holder part (25) is connected as one piece with the holder part.

19. Fixing device according to claim 1, **characterized in that** the holder part comprises a collar nut (47) that penetrates through the fixing opening (32) of the housing plate (11) of the seat belt retractor housing (10) via a collar (48) and that can be screwed onto a fixing screw anchored on the vehicle part (40), whose collar (48) abuts the vehicle part (40) or the fixing screw, whereby the seat belt retractor housing (10) sits rotatably with its fixing opening (32) on the collar (48) of the collar nut (47) and wherein on the side of the housing plate (11) facing away from the vehicle part (40), a holding sheet (45) held on the collar (48) of the collar nut (47) is arranged which engages through an associated further recess (33) in the housing plate (11) via a fixing shoulder (46) projecting from it at an angle and which can be fixedly, non-rotatably disposed in a further opening formed in the vehicle part (40), and **in that** the seat belt retractor housing (10), by means of tongue (49) projecting into the recess (33) and guided through an aperture (50) formed in the fixing shoulder (46), is fixed relative to the holding sheet (45) and under a load, as a result of deformation of the tongue (49) engaging through the fixing shoulder (46), is rotatable.

## Revendications

1. Dispositif de fixation pour un enrouleur de ceinture à fixer sur une pièce d'un véhicule, la plaque du boîtier d'enrouleur ayant au moins un orifice de fixation destiné à recevoir un assemblage à vis saisissant la pièce du véhicule dans un orifice de fixation réalisé dans celle-ci et le boîtier d'enrouleur étant monté rotatif par rapport à l'orifice de fixation de la pièce du véhicule, afin que l'enrouleur de ceinture s'oriente automatiquement dans une direction d'application des forces dans le cas où la sangle part en angle par rapport à l'axe de l'arbre, **caractérisé en ce que** le boîtier d'enrouleur (10) est maintenu rotatif sur un élément de fixation (13, 19, 25) à assembler fermement avec la pièce du véhicule (40) et le boîtier d'enrouleur (10) est maintenu par l'élément de fixation (13, 19, 25) à distance de l'orifice de fixation (41) de la pièce du véhicule (40) et est fixé contre l'élément de fixation (13, 19, 25) de telle sorte que le boîtier d'enrouleur (10) peut tourner par rapport à l'élément de fixation (13, 19, 25) en surmontant une résistance préréglée.

2. Dispositif de fixation selon la revendication 1, **caractérisé en ce que** l'élément de fixation (13) est réalisé sous forme d'élément plat et comporte un orifice (14) pour le passage d'un moyen de fixation, destiné à fixer l'élément de fixation (13) sur la pièce du véhicule (40), et un autre orifice (15) pour la fixation rotative du boîtier d'enrouleur (10) contre l'élément de fixation (13).

3. Dispositif de fixation selon la revendication 2, **caractérisé en ce que** le boîtier d'enrouleur (10) est fixé contre l'élément de fixation (13) au moyen d'un rivet (16) passant à travers l'orifice (15) de l'élément de fixation (13) et l'orifice de fixation (32) de la plaque (11) du boîtier d'enrouleur (10).

4. Dispositif de fixation selon la revendication 2 ou 3, **caractérisé en ce que** l'élément de fixation (13) est en appui sur la plaque (11) plane du boîtier d'enrouleur (10), laquelle comporte l'orifice de fixation (32).

5. Dispositif de fixation selon la revendication 2 ou 3, **caractérisé en ce que** la plaque (11) du boîtier d'enrouleur (10), prévue pour l'assemblage à l'élément de fixation (13), comporte une zone coudée (18) destinée à recevoir l'extrémité correspondante de l'élément de fixation (13) et le coude forme, conjointement avec les bords extérieurs de l'élément de fixation (13), une limite pour le mouvement de rotation du boîtier d'enrouleur (10) par rapport à l'élément de fixation (13).

6. Dispositif de fixation selon l'une quelconque des revendications 2 à 5, **caractérisé en ce que** l'élément de fixation (13) comporte une saillie de fixation (17), en saillie angulaire sur ce dernier et apte à être introduite dans un autre orifice réalisé dans la pièce du véhicule (40).

7. Dispositif de fixation selon la revendication 1, **caractérisé en ce que** l'élément de fixation est formé par une vis à embase (19), qui passe à travers l'orifice de fixation (32) de la plaque (11) du boîtier d'enrouleur (10) et est destinée à être fixée avec un filetage (20) sur une extrémité dans l'orifice de fixation (41) de la pièce du véhicule (40), et qui est en appui avec son embase (21) contre la pièce du véhicule (40), le boîtier d'enrouleur (10) étant positionné avec son orifice de fixation (32) sur l'embase (21) de la vis à embase (19) et étant maintenu par la tête (22) de la vis à embase (19), et un élément à ressort (24) précontraint étant agencé sur l'embase (21) de la vis à embase (19) entre la pièce du véhicule (40) et le boîtier d'enrouleur (10).

8. Dispositif de fixation selon la revendication 7, **caractérisé en ce que** l'élément à ressort (24) est formé par un ressort Belleville.

9. Dispositif de fixation selon la revendication 1, **caractérisé en ce que** l'élément de fixation (25) est réalisé sous forme d'élément en forme de U, qui est apte à être enfiché sur la plaque du boîtier (11), munie de l'orifice de fixation (32), et reçoit la plaque du boîtier (11) entre ses plaques (26) du U, les orifices (28) ménagés dans les plaques (26) du U étant alignés avec l'orifice de fixation (32) de la plaque de boîtier (11) et une des plaques (26) du U de l'élément de fixation (25) venant en appui lors du montage de l'enrouleur de ceinture sur la pièce du véhicule (40) entre la pièce du véhicule (40) et la plaque (11) du boîtier d'enrouleur (10).

10. Dispositif de fixation selon la revendication 9, **caractérisé en ce qu'**un écrou de fixation (30), propre à être vissé à une vis de fixation (31) réalisée dans l'orifice de fixation (41) de la pièce du véhicule (40), est conçu sous forme d'écrou à embase, dont la hauteur de l'embase correspond à l'épaisseur du matériau de la plaque (11) du boîtier d'enrouleur (10), y compris l'épaisseur du matériau de la plaque (26) du U de l'élément de fixation (25), disposée entre la pièce du véhicule (40) et la plaque du boîtier (11).

11. Dispositif de fixation selon la revendication 9 ou 10, **caractérisé en ce qu'**un élément de ressort est agencé dans l'intervalle formé par la plaque (26) du U de l'élément de fixation (25), disposée entre la pièce du véhicule (40) et la plaque (11) du boîtier d'enrouleur (10).

12. Dispositif de fixation selon la revendication 11, **caractérisé en ce que** l'élément de ressort est réalisé sous forme de ressort Belleville.

13. Dispositif de fixation selon l'une quelconque des revendications 9 à 12, **caractérisé en ce que** sur la plaque (26) du U de l'élément de fixation (25), opposée à la pièce du véhicule (40), sont réalisées des saillies (29), qui entourent au moins partiellement l'orifice (28), réalisé dans ladite plaque du U, et qui font fonction de support de montage et de système anti-rotation pour un écrou de fixation (30).

14. Dispositif de fixation selon l'une quelconque des revendications 9 à 12, **caractérisé en ce que** sur la plaque (26) du U de l'élément de fixation (25), opposée à la pièce du véhicule (40), est monté de manière fixe un écrou de fixation (30) en alignement avec l'orifice (28) réalisé dans ladite plaque du U.

15. Dispositif de fixation selon l'une quelconque des revendications 9 à 14, **caractérisé en ce que** l'élément de fixation (25) comporte une saillie de fixation (27) en saillie angulaire sur celui-ci et destinée à venir en prise avec un autre orifice correspondant de la pièce du véhicule (40).

16. Dispositif de fixation selon la revendication 15, **caractérisé en ce que** l'élément de fixation (25) passe avec sa saillie de fixation (27) à travers la plaque (11) du boîtier de l'enrouleur de ceinture dans un autre évidement (33) correspondant.

17. Dispositif de fixation selon au moins l'une quelconque des revendications 1 à 16, **caractérisé en ce que** l'élément de fixation (13, 25) est réalisé en métal et un écrou de fixation (30), agencé sur l'élément de fixation (25), est réalisé sous forme d'écrou soudé, assemblé de manière fixe à l'élément de fixation.

18. Dispositif de fixation selon au moins l'une quelconque des revendications 1 à 16, **caractérisé en ce que** l' élément de fixation (13, 25) est réalisé en matière plastique et un écrou de fixation (30), prévu sur l'élément de fixation (25), est assemblé d'un seul tenant avec l'élément de fixation.

19. Dispositif de fixation selon la revendication 1, **caractérisé en ce que** l'élément de fixation est formé par un écrou à embase (47), qui passe avec une embase (48) à travers l'orifice de fixation (32) de la plaque (11) du boîtier d'enrouleur (10) et est destiné à être vissé sur une vis de fixation ancrée dans la pièce du véhicule (40), et qui est en appui avec son embase (48) contre la pièce du véhicule (40), plus précisément la vis de fixation, le boîtier d'enrouleur (10) étant positionné avec son orifice de fixation (32) de manière rotative sur l'embase (48) de l'écrou à embase (47), et une plaque de fixation (45), maintenue sur l'embase (48) de l'écrou à embase (47), étant disposée sur le côté de la plaque du boîtier (11), opposé à la pièce du véhicule (40), laquelle plaque de fixation (45) passe avec une saillie de fixation (46), en saillie angulaire sur cette dernière, à travers un autre évidement (33) disposé dans la plaque du boîtier (11) et peut être fixée de manière immobilisée en rotation dans un autre orifice réalisé dans la pièce du véhicule (40), et **en ce que** le boîtier d'enrouleur (10) est fixé par rapport à la plaque de fixation (45) au moyen d'une patte (49) s'engageant dans l'évidement (33) et guidée à travers un trou débouchant (50) réalisé dans la saillie de fixation (46), et peut tourner sous charge par suite de la déformation de la patte (49) passant à travers la saillie de fixation (46).
